# FASCICULE DE BREVET EUROPEEN

(11) **EP 3 244 045 B1**
(45) Date de publication et mention de la délivrance du brevet: **24.07.2019**
(21) Numéro de dépôt: 17170241.8
(22) Date de dépôt: 09.05.2017
(51) Int. Cl.: F02D 41/00, F02D 41/06, F02D 41/22, F02D 13/02, F02M 26/49

(54) **PROCEDE DE CONTROLE D'UN DISPOSITIF DE MOTORISATION ET DISPOSITIF DE MOTORISATION ASSOCIE**
KONTROLLVERFAHREN EINER MOTORISIERUNGSVORRICHTUNG, UND ENTSPRECHENDE MOTORISIERUNGSVORRICHTUNG
METHOD FOR CONTROLLING A MOTOR DEVICE AND ASSOCIATED MOTOR DEVICE

(30) Priorité: 10.05.2016 FR 1654143
(43) Date de publication de la demande: 15.11.2017
(73) Titulaire: Renault s.a.s, 92100 Boulogne-Billancourt (FR)
(72) Inventeur: GIMENES, Thomas, 75014 PARIS (FR)

(56) Documents cités:
- DE-A1-102011 113 925
- FR-A1- 3 019 230
- FR-A3- 2 944 323
- US-A1- 2005 193 995
- US-A1- 2008 190 107
- US-A1- 2009 078 223
- US-B1- 6 273 056

## Description

### DOMAINE TECHNIQUE DE L'INVENTION

L'invention concerne un procédé de contrôle d'un dispositif de motorisation, plus particulièrement d'un dispositif comprenant un moteur à combustion interne suralimenté de type diesel, équipé d'un circuit de recirculation externe des gaz d'échappement à haute pression et d'une distribution variable de type VVT (pour Variable Valve Timing, ou distribution à calage variable). Elle concerne également un dispositif de motorisation pour la mise en oeuvre d'un tel procédé. Elle trouve une application avantageuse sous la forme d'un procédé de contrôle embarqué dans un véhicule automobile équipé d'un dispositif de motorisation comprenant un moteur diesel et comprenant en outre un piège à oxydes d'azote ou un catalyseur de réduction sélective des oxydes d'azote.

### ETAT DE LA TECHNIQUE

Les moteurs diesel suralimentés modernes des véhicules automobiles, qui fonctionnent en mélange pauvre, sont souvent équipés à l'échappement d'au moins un système de post-traitement des oxydes d'azote (NOx) émis dans les gaz de combustion, par exemple un piège à oxydes d'azote ou un catalyseur de réduction sélective des oxydes d'azote, pour limiter les rejets dans l'atmosphère extérieure de ces molécules nuisibles à l'environnement.

D'autre part, l'efficacité de traitement de ces systèmes de post-traitement étant limitée, ces moteurs diesel suralimentés sont en outre généralement équipés d'au moins un circuit de recirculation partielle des gaz d'échappement à l'admission (ou : circuit EGR, acronyme anglais pour : Exhaust Gas Recycling), apte à prélever une partie des gaz de combustion du moteur et à les réintroduire dans le circuit d'admission d'air du moteur, en les mélangeant à l'air frais admis dans le moteur.

De manière connue en soi, il en résulte une moindre émission des NOx dans les gaz de combustion du moteur, c'est-à-dire à la source, ce qui permet de diminuer la part de réduction des NOₓ par le système de post-traitement.

En particulier, un circuit de recirculation des gaz d'échappement dit « à haute pression » comprend un conduit de recirculation, connecté à une extrémité au circuit d'échappement du moteur, en un point situé en amont de la turbine d'un turbocompresseur du moteur, et à son autre extrémité au circuit d'admission du moteur, en un point situé en aval du compresseur du turbocompresseur. Il comprend en outre une vanne, dite « vanne EGR », afin de contrôler la proportion de gaz d'échappement à recycler à l'admission.

Or, des conditions de basse température de l'air ambiant et/ou du liquide de refroidissement du moteur, par exemple des conditions inférieures à 0°C, favorisent l'apparition d'un phénomène d'encrassement de la vanne EGR par des hydrocarbures imbrûlés (HC) présents dans les gaz d'échappement. Au contact des parois froides du conduit de recirculation et de la vanne, ces hydrocarbures imbrûlés sont condensés puis polymérisés en composés lourds très adhérents. Dans certaines conditions, par exemple lors d'un démarrage à froid, le circuit de recirculation est traversé par des gaz d'échappement qui ne sont pas suffisamment chauds pour nettoyer les dépôts d'hydrocarbures imbrûlés : ce phénomène est connu sous le nom de « laquage ».

Le laquage de la vanne se traduit par un collage de l'obturateur de la vanne (généralement une soupape ou un volet) sur son siège, ce qui empêche l'ouverture de la vanne et ainsi le dosage des gaz recyclés. Cela empêche temporairement ou définitivement le fonctionnement du circuit de recirculation des gaz d'échappement, de sorte que l'utilisateur peut être obligé à faire changer la vanne par un professionnel, et que les limites réglementaires d'émissions de NOₓ ne sont pas respectées.

Avec la sévérité toujours accrue de la législation, par exemple avec les normes européennes dites Euro6c, Euro6d et Euro7, il devient nécessaire que les véhicules respectent des seuils d'émissions de NOx très faibles dans des conditions ambiantes froides de type hivernal, plus précisément à -7°C. Cet objectif peut être atteint grâce à la présence de gaz brûlés dans les chambres de combustion du moteur, ces gaz pouvant provenir du circuit de recirculation.

On connaît de l'art antérieur plusieurs dispositifs qui permettent d'activer le recyclage des gaz d'échappement à basse température en ouvrant la vanne EGR : par exemple, la publication FR-A1- 2 902 470 divulgue une vanne comprenant un corps, une soupape activée par un moteur et un siège de soupape, ladite vanne comprenant un dispositif de chauffage du siège de la soupape. Le dispositif de chauffage permet d'augmenter la température du siège de la soupape, pour éviter l'encrassement de la vanne. On peut ainsi la manoeuvrer dans toutes les conditions de fonctionnement, en particulier à basse température. Néanmoins, les dispositifs et procédés connus qui visent à éviter le laquage de la vanne EGR sont relativement complexes à mettre en oeuvre car ils nécessitent l'implantation de composants supplémentaires dans le véhicule, et ils entraînent une augmentation de la consommation de carburant, qui est due au procédé de chauffage.

La publication US-A1-2008190107 divulgue un procédé de contrôle d'un dispositif de motorisation de véhicule automobile comprenant un moteur du type diesel suralimenté, un circuit de recirculation partielle à haute pression des gaz d'échappement à l'admission du moteur pourvu d'une vanne commandée, et des moyens de calage variable des soupapes du moteur. Ce procédé comporte une étape de réglage donné («nominal ») du dispositif de motorisation, pour chaque point de fonctionnement stabilisé du moteur, dans lequel ladite vanne commandée est ouverte et les soupapes présentent un croisement donné, et une étape de réglage temporaire spécifique à froid dans lequel, pour le même point de fonctionnement du moteur, le croisement est augmenté.

FR 3 019 230 A1 et US 6 273 056 B1 divulguent d'autres procédés contribuant au réchauffement du moteur.

### RESUME DE L'INVENTION

L'invention propose de remédier aux défauts des dispositifs et procédés connus d'élimination du laquage des vannes du circuit EGR HP (circuit de recirculation partielle à haute pression des gaz d'échappement) d'un moteur suralimenté de type diesel, dans le cas où le moteur est équipé en outre d'une distribution variable de type VVT.

Elle propose pour cela un procédé de contrôle d'un dispositif de motorisation de véhicule automobile comprenant : un moteur à combustion interne du type diesel suralimenté ; un circuit de recirculation partielle à haute pression des gaz d'échappement à l'admission pourvu d'une vanne commandée ; et, des moyens de calage variable des soupapes du moteur, ledit procédé comportant une étape de réglage nominal du dispositif de motorisation, pour chaque point de fonctionnement stabilisé du moteur, dans lequel ladite vanne est ouverte et les soupapes présentent un croisement relativement peu élevé.

Le procédé comprend en outre :
- Une étape de mesure d'une valeur de température représentative du fonctionnement du moteur ;
- Une étape de comparaison de ladite température avec un premier seuil ; et,
- Lorsque ladite température est inférieure audit premier seuil, une étape de réglage du dispositif de motorisation dans lequel ladite vanne commandée est fermée et les soupapes présentent un croisement relativement élevé, ledit croisement étant plus élevé que celui du réglage nominal pour un même point de fonctionnement stabilisé du moteur.

Dans un mode de réalisation de l'invention, la température représentative du fonctionnement du moteur est une température de liquide de refroidissement.

Le procédé selon l'invention est caractérisé en ce qu'il comprend en outre :
- Une étape de comparaison de ladite température avec un second seuil supérieur au premier seuil ;
- Lorsque ladite température est comprise entre les premier et second seuils, une étape de réglage du dispositif de motorisation dans lequel ladite vanne est partiellement ouverte et les soupapes présentent un croisement relativement élevé identique au croisement de l'étape qui est rélisée lorsque ladite température est inférieure audit premier seuil, pour un même point de fonctionnement stabilisé du moteur.

Par exemple, le premier seuil de température est sensiblement compris entre 0°C et 5°C, et le second seuil est sensiblement égal à 20°C.

### BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :
- la figure 1 représente un exemple de dispositif de motorisation apte à la mise en oeuvre du procédé selon l'invention ;
- la figure 2 est un schéma qui illustre le croisement de soupapes dans un dispositif conforme à la figure 1 ; et,
- la figure 3 est un logigramme des étapes d'un procédé de contrôle du dispositif de motorisation conforme à l'invention.

### DESCRIPTION DETAILLEE DES FIGURES

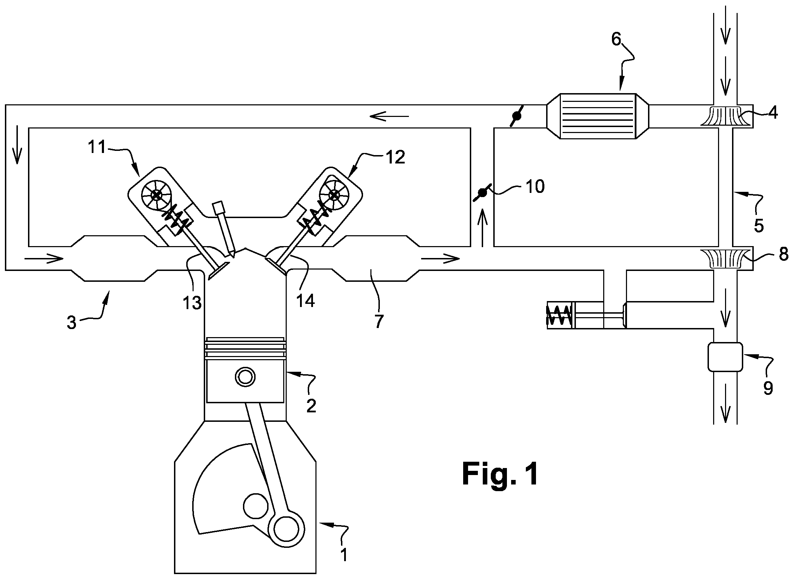

Sur la figure 1, on a représenté un dispositif de motorisation apte à la mise en oeuvre du procédé selon l'invention. Il comprend un moteur 1 à combustion interne de véhicule automobile, du type diesel suralimenté, équipé d'un circuit de recirculation des gaz brûlés EGR et d'une distribution variable.

Au moins un cylindre 2 du moteur est alimenté en air et en gaz brûlés à partir d'un répartiteur ou collecteur d'admission 3. Le circuit d'admission d'air du moteur est équipé d'un compresseur 4 d'un turbocompresseur 5 et d'un refroidisseur d'air suralimenté 6 monté en aval du compresseur 4. Le circuit d'échappement du moteur comporte un collecteur d'échappement 7, une turbine 8 du turbocompresseur 5 et un système de traitement 9 des gaz de combustion du moteur, comprenant par exemple un piège à oxydes d'azote 9 ou un catalyseur de réduction sélective des oxydes d'azote 9. Le circuit d'échappement comporte en outre une dérivation qui se présente sous la forme d'un circuit de recirculation partielle à haute pression (circuit EGR à haute pression ou circuit EGR HP). Ce circuit EGR prélève une partie des gaz brûlés à l'échappement du moteur en un point situé en amont de la turbine 8 (dans le sens de circulation des gaz) et les réintroduit dans le circuit d'admission d'un cylindre 2 en aval du compresseur 4 (dans le sens de circulation de l'air admis dans le moteur), plus précisément à la sortie du refroidisseur d'air suralimenté 6. Ce circuit EGR est équipé d'une vanne commandée 10, dite vanne EGR 10, dont le degré d'ouverture permet d'ajuster la proportion de gaz recyclés. De plus le moteur est équipé d'un capteur (non représenté) pour déterminer la quantité de gaz brûlés réinjectés par le circuit EGR. Par exemple, il peut s'agir d'un débitmètre ou d'un capteur de pression.

D'autre part, le moteur 1 est équipé de moyens de distribution variable, constitués ici par deux actionneurs 11,12 (représentés partiellement), plus précisément des moyens de calage variable 11,12 de soupapes d'admission 13 et d'échappement 14 du moteur. Par exemple, ils peuvent prendre la forme d'un variateur électrique à palette couplé à des arbres à cames permettant le déplacement des soupapes. Dans un autre mode de réalisation très courant non représenté ici, le moteur est équipé de moyens de calage variable (ou : VVT, pour Variable Valve Timing) hydrauliques, dans lesquels la position des soupapes d'admission 13 et d'échappement peut être modifiée grâce à de l'huile sous pression, quand la température de l'huile est suffisante.

Sur ce type de moteur, la quantité de gaz brûlés présente dans les cylindres 2 à la fermeture de la soupape d'admission peut être obtenue de deux façons, pour un point de fonctionnement du moteur régime-charge donné : soit par une recirculation externe de gaz brûlés, via le circuit EGR, soit par une recirculation interne (dite IGR : Internai Gas Recycling), via les actionneurs 11,12 des soupapes d'admission et d'échappement, qui constituent des moyens de distribution variable.

La distribution variable, ou VVT, permet de réaliser un recyclage interne des gaz brûlés dans les cylindres du moteur en commandant l'ouverture et la fermeture des soupapes d'admission 13 et d'échappement 14. Plus précisément, lorsque les soupapes d'admission 13 et d'échappement 14 sont ouvertes simultanément à la fin de la phase de vidange des gaz brûlés dans les cylindres (lors de la remontée des pistons vers le point mort haut) et au début de la phase d'aspiration d'air frais (lors de la descente des pistons qui s'ensuit), une telle position dite « croisée » des soupapes 13,14 met en relation l'air provenant du collecteur d'admission 3 et les gaz brûlés présents dans le collecteur d'échappement 7 du moteur. Lorsque la pression instantanée à l'échappement est supérieure à la pression instantanée à l'admission, les gaz brûlés présents ont tendance à rester dans les chambres de combustion du moteur : soit ils ne sont pas vidangés du tout, soit ils sont vidangés puis réaspirés dans les cylindres une fois que les soupapes d'admission 13 des cylindres correspondants sont ouvertes, soit ils sont réaspirés dans le collecteur d'admission 3 puis réintroduits dans les chambres de combustion une fois que les soupapes d'échappement 14 sont fermées.

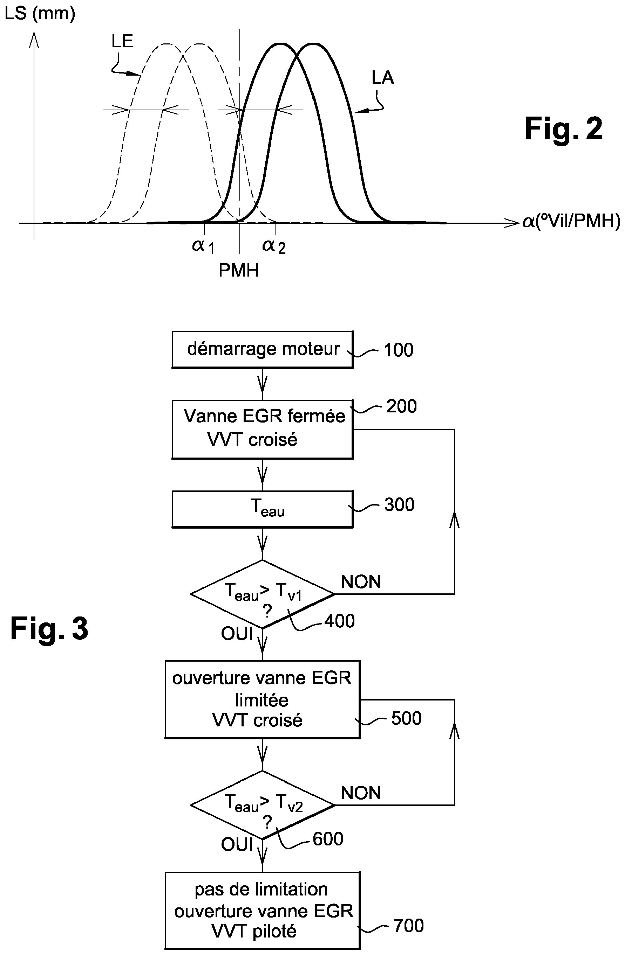

Le croisement des soupapes 13,14 est illustré à la figure 2. Sur cette figure, on a représenté en abscisse l'angle de vilebrequin α dans un cylindre du moteur, exprimé en degrés par rapport au point mort haut (°vil/PMH), et en ordonnée la levée de soupape LS, exprimée en millimètres. Deux types distincts de levées de la soupape d'échappement sont représentés respectivement par deux courbes en traits pointillés, et deux types distincts de levées de la soupape d'admission sont représentés respectivement par deux courbes en traits pleins.

Dans leurs positions respectives les plus croisées, les levées de soupape d'échappement et d'admission sont représentées respectivement par les courbes LE et LA. Ces soupapes sont simultanément ouvertes entre deux angles de vilebrequin α₁ et α₂ autour du point mort haut PMH.

Les positions les plus décroisées de la soupape d'échappement et d'admission sont représentées respectivement par les deux autres courbes de la figure respectivement en traits pointillés et en traits pleins. On voit sur la figure que les soupapes ne sont pas, ou ne sont que peu, ouvertes simultanément au voisinage du PMH, contrairement au cas précédent.

Les moyens de calage variable 11,12 des soupapes 13,14 permettent de piloter les soupapes d'échappement 14 et d'admission 13 dans l'une ou l'autre de ces positions extrêmes ainsi que dans les positions intermédiaires à ces positions extrêmes, comme le symbolisent les flèches sur la figure 2, de sorte qu'on peut ajuster la valeur de croisement pour obtenir un taux de recirculation interne donné.

Les avantages du recyclage interne par rapport au recyclage externe sont la réaction rapide du système et une bonne répartition des gaz recyclés. En effet, les deux sources de gaz recyclés possèdent des temps de réponse distincts. Pour piloter l'IGR, on joue sur le déphasage des soupapes qui est très rapide. En revanche, piloter l'EGR est plus lent car le temps d'écoulement des gaz brûlés dans le circuit des gaz d'échappement est long, du fait de la longueur de ce circuit.

C'est pourquoi on pilote de préférence l'IGR lors de transitoires du moteur, c'est-à-dire lors de modifications rapides du point de fonctionnement régime-charge du moteur, dans lesquelles il est nécessaire d'avoir un temps de réponse très rapide.

La figure 3 est un logigramme des étapes du procédé de contrôle du dispositif de motorisation selon un mode de réalisation de l'invention.

Le procédé débute par une étape 100 de démarrage du moteur. Le procédé se poursuit alors par une étape 200 dans laquelle, de manière conservatoire, quel que soit le point de fonctionnement du moteur, et plus particulièrement quels que soit le régime et sa charge (ou : couple), la vanne EGR 10 est fermée, et les moyens de distribution variable pilotent les soupapes 13,14 sont dans une position de croisement relativement élevé, par exemple la valeur de croisement maximale telle que résultant des courbes LA et LE de la figure 2.

Le procédé se poursuit par une étape 300 de mesure d'une valeur de température représentative du fonctionnement du moteur, de préférence la température de liquide de refroidissement Tₑₐᵤ. Cette température est ensuite comparée lors d'une première étape de test 400 avec un premier seuil de température Tᵥ₁, dit seuil d'ouverture partielle de vanne EGR. Par exemple, ce premier seuil de température peut être compris entre 0°C et 5°C.

Si ladite température est inférieure audit premier seuil, le procédé reprend à l'étape 200, la vanne EGR 10 restant fermée et les soupapes conservant le croisement relativement élevé de l'étape 200. On s'assure ainsi qu'à froid, la vanne EGR n'est pas manoeuvrée dans le sens de l'ouverture dans des conditions qui risqueraient de la laquer, tout en assurant un taux de recyclage des gaz d'échappement important grâce au croisement relativement élevé des soupapes, compensant totalement ou au moins en partie l'absence d'EGR.

On notera que, dans le cas où les moyens de distribution variable sont un VVT hydraulique, un pilotage du VVT étant impossible en dessous de certaines températures d'huile, il convient que ce soit la position de repos du VVT qui corresponde à la position la plus croisée des soupapes.

Dans le cas contraire où ladite température est supérieure audit premier seuil, le procédé oriente vers une étape 500 dans laquelle la vanne EGR 10 peut être ouverte partiellement. Plus précisément, l'ouverture de la vanne est limitée par rapport à l'ouverture qui est autorisée dans les conditions de fonctionnement normales (à chaud) du moteur pour le point de fonctionnement stabilisé considéré du moteur, de manière à limiter ses risques d'exposition au laquage. Le croisement du VVT reste identique à celui de l'étape 200.

Le procédé se poursuit par une deuxième étape de test 600 dans laquelle la température Tₑₐᵤ est comparée à un deuxième seuil Tᵥ₂, dit seuil d'ouverture complète de la vanne EGR, qui est supérieur au premier seuil Tᵥ₁. Par exemple, ledit deuxième seuil peut être sensiblement égal à 20°C. Il correspond à un fonctionnement de la vanne EGR 10 sans aucun risque de laquage, le degré d'ouverture de la vanne n'étant pas du tout limité. Bien entendu, la valeur dudit deuxième seuil peut être ajustée en fonction de résultats d'essais.

Si ladite température est inférieure audit deuxième seuil, le procédé reprend à l'étape 500 dans laquelle l'ouverture de la vanne est autorisée, mais limitée. Dans le cas contraire, il oriente vers une étape 700 dans laquelle la vanne EGR peut être ouverte sans restriction, et le VVT est piloté de manière à adopter une position moins croisée qu'à l'étape 200 pour le même point de fonctionnement stabilisé du moteur. En référence à la figure 2, la valeur du croisement est relativement peu élevée, voire nulle. Ce pilotage du VVT, même si il s'agit d'un VVT hydraulique, est possible à ce niveau de température de liquide de refroidissement car la température d'huile est suffisamment chaude également. A l'étape 700, on règle donc essentiellement l'ouverture de la vanne EGR 10 en fonction du niveau d'émissions de NOₓ du véhicule souhaité, et on peut utiliser le pilotage du WT lors de modes de fonctionnement transitoire du moteur, c'est-à-dire lors de variations rapides du point de fonctionnement du moteur, afin de mettre à profit le temps de réponse rapide d'un tel pilotage. A l'étape 700, le réglage adopté correspond au réglage normal, c'est-à-dire nominal, du dispositif de motorisation, contrairement aux réglages des étapes 200 et 500, qui sont des modes de réglages dégradés.

On notera que le deuxième seuil Tᵥ₂, qui correspond au seuil d'ouverture complète de la vanne EGR, représente une température qui élimine tout risque de laquage compte tenu des risques liés à l'état de la combustion à cette température, tandis que le premier seuil Tᵥ₁, qui est inférieur au deuxième seuil, est choisi pour adapter l'ouverture de la vanne (en la limitant) au risque de laquage plus élevé à cette température.

En variante du procédé qui a été décrit à la figure 3, il est entendu qu'on peut ne pas souhaiter étendre la plage d'utilisation de l'EGR en dessous du deuxième seuil Tv2. Dans ce cas, l'étape 500 du procédé est remplacée par l'étape 200 ; en d'autres termes, la vanne EGR reste fermée tant que la température n'a pas atteint le seuil d'ouverture complète Tᵥ₂.

En résumé, le procédé selon l'invention propose, pour un point de fonctionnement donné du moteur, de limiter les émissions de NOₓ du moteur à la source par au moins deux réglages distincts du dispositif de motorisation, pour un point de fonctionnement stabilisé du moteur donné : un premier réglage à froid, sans EGR mais avec un taux d'IGR important obtenu grâce à un croisement de soupapes relativement élevé ; et, un deuxième réglage nominal à chaud, c'est-à-dire au-dessus d'un seuil de température de liquide de refroidissement du moteur, avec un taux d'EGR important et un faible taux d'IGR obtenu grâce à un croisement de soupapes relativement peu élevé. De cette manière, on évite d'actionner la vanne EGR à des températures très basses où elle pourrait subir un laquage, tout en compensant totalement ou partiellement, grâce à l'IGR, l'augmentation des émissions de NOₓ due à l'absence d'EGR à froid.

Pour un point de fonctionnement stabilisé donné du moteur, on peut prévoir en outre un troisième réglage pour des températures intermédiaires entre le fonctionnement à froid et le fonctionnement à chaud, dans lequel le taux d'EGR est inférieur au taux d'EGR du réglage nominal (à chaud), le taux d'IGR élevé étant identique au taux du réglage à froid.

## Revendications

1. Procédé de contrôle d'un dispositif de motorisation de véhicule automobile comprenant un moteur (2) à combustion interne du type diesel suralimenté ; un circuit de recirculation partielle à haute pression des gaz d'échappement à l'admission pourvu d'une vanne commandée (10) ; et, des moyens de calage variable (11,12) des soupapes (13,14) du moteur (2), ledit procédé comportant une étape (700) de réglage nominal du dispositif de motorisation, pour chaque point de fonctionnement stabilisé du moteur (2), dans lequel ladite vanne commandée (10) est ouverte et les soupapes (13,14) présentent un croisement relativement peu élevé, ledit procédé comprenant en outre :
- une étape (300) de mesure d'une valeur de température (Tₑₐᵤ) représentative du fonctionnement du moteur (1) ;
- une étape (400) de comparaison de ladite température avec un premier seuil (Tᵥ₁) ; et,
- lorsque ladite température (Tₑₐᵤ) est inférieure audit premier seuil (Tᵥ₁), une étape (200) de réglage du dispositif de motorisation dans lequel ladite vanne commandée (10) est fermée et les soupapes (13,14) présentent un croisement relativement élevé, ledit croisement étant plus élevé que celui du réglage nominal pour un même point de fonctionnement stabilisé du moteur,
**CARACTERISE en ce qu'**il comprend en outre :
- une étape (600) de comparaison de ladite température (Tₑₐᵤ) avec un second seuil (Tᵥ₂) supérieur au premier seuil (Tᵥ₁) ; et,
- lorsque ladite température ((Tₑₐᵤ) est comprise entre les premier et second seuils (Tᵥ₁,Tᵥ₂) de température, une étape (500) de réglage du dispositif de motorisation dans lequel ladite vanne commandée (10) est partiellement ouverte et les soupapes (13,14) présentent un croisement relativement élevé identique au croisement de l'étape (200) qui est réalisée lorsque ladite température (Tₑₐᵤ) est inférieure audit premier seuil (Tᵥ₁), pour un même point de fonctionnement stabilisé du moteur.

2. Procédé selon la revendication 1, dans lequel la température représentative du fonctionnement du moteur (Tₑₐᵤ) est une température du liquide de refroidissement du moteur.

3. Procédé selon l'une quelconque des revendications précédentes, dans lequel le premier seuil (Tᵥ₁) de température est sensiblement compris entre 0°C et 5°C, et dans lequel le second seuil (Tv2) est sensiblement égal à 20°C.

## Patentansprüche

1. Verfahren zur Kontrolle einer Kraftfahrzeug-Antriebsvorrichtung, die einen aufgeladenen Verbrennungsmotor (2) der Art Diesel, einen Kreislauf zur teilweisen Hochdruck-Abgasrückführung zur Ansaugseite, der mit einem gesteuerten Ventil (10) versehen ist, und Einrichtungen zur variablen Einstellung (11, 12) der Ventile (13, 14) des Motors (2) enthält, wobei das Verfahren einen Schritt (700) der Standardeinstellung der Antriebsvorrichtung für jeden stabilisierten Betriebspunkt des Motors (2) aufweist, wobei das gesteuerte Ventil (10) offen ist und die Ventile (13, 14) eine relativ kleine Überschneidung aufweisen, wobei das Verfahren außerdem enthält:
- einen Schritt (300) der Messung eines für den Betrieb des Motors (1) repräsentativen Temperaturwerts (Tₑₐᵤ) ;
- einen Schritt (400) des Vergleichs der Temperatur mit einer ersten Schwelle (Tᵥ₁); und,
- wenn die Temperatur (Tₑₐᵤ) niedriger ist als die erste Schwelle (Tᵥ₁), einen Schritt (200) der Einstellung der Antriebsvorrichtung, wobei das gesteuerte Ventil (10) geschlossen ist und die Ventile (13, 14) eine relativ große Überschneidung aufweisen, wobei die Überschneidung größer ist als diejenige der Standardeinstellung für einen gleichen stabilisierten Betriebspunkt des Motors,
**dadurch gekennzeichnet, dass** es außerdem enthält:
- einen Schritt (600) des Vergleichs der Temperatur (Tₑₐᵤ) mit einer zweiten Schwelle (Tᵥ₂) höher als die erste Schwelle (Tᵥ₁) ; und,
- wenn die Temperatur ((Tₑₐᵤ) zwischen der ersten und der zweiten Temperaturschwelle (Tᵥ₁, Tᵥ₂) liegt, einen Schritt (500) der Einstellung der Antriebsvorrichtung, wobei das gesteuerte Ventil (10) teilweise offen ist und die Ventile (13, 14) eine relativ große Überschneidung gleich der Überschneidung des Schritts (200) aufweisen, der durchgeführt wird, wenn die Temperatur (Tₑₐᵤ) niedriger ist als die erste Schwelle (Tᵥ₁), für einen gleichen stabilisierten Betriebspunkt des Motors.

2. Verfahren nach Anspruch 1, wobei die für den Betrieb des Motors repräsentative Temperatur (Tₑₐᵤ) eine Temperatur des Kühlmittels des Motors ist.

3. Verfahren nach einem der vorhergehenden Ansprüche, wobei die erste Temperaturschwelle (Tᵥ₁) im Wesentlichen zwischen 0°C und 5°C liegt, und wobei die zweite Schwelle (Tᵥ₂) im Wesentlichen gleich 20°C ist.

## Claims

1. Method for controlling a drive device of a motor vehicle, comprising an internal combustion engine (2) of the forced-induction diesel type; a circuit for the partial recirculation, at high pressure, of the exhaust gases to the intake, provided with a controlled valve (10); and means (11, 12) for varying the timing of the poppet valves (13, 14) of the engine (2), said method comprising a step (700) of nominal setting of the drive device, for each stabilized operating point of the engine (2), in which said controlled valve (10) is opened and the poppet valves (13, 14) have a relatively small overlap, said method further comprising:
- a step (300) of measuring a temperature value (Tₑₐᵤ) representative of the operation of the engine (1);
- a step (400) of comparing said temperature with a first threshold (Tᵥ₁); and,
- when said temperature (Tₑₐᵤ) is lower than said first threshold (Tᵥ₁), a step (200) of adjusting the drive device in which said controlled valve (10) is closed and the poppet valves (13, 14) have a relatively large overlap, said overlap being greater than that of the nominal setting for a same stabilized operating point of the engine,
**CHARACTERIZED in that** it further comprises:
- a step (600) of comparing said temperature (Tₑₐᵤ) with a second threshold (Tᵥ₂) that is above the first threshold (Tᵥ₁); and,
- when said temperature (Tₑₐᵤ) is between the first and second temperature thresholds (Tᵥ₁, Tᵥ₂) a step (500) of adjusting the drive device in which said controlled valve (10) is partially opened and the poppet valves (13, 14) have a relatively large overlap identical to the overlap of step (200) which is carried out when said temperature (Tₑₐᵤ) is below said first threshold (Tᵥ₁), for a same stabilized operating point of the engine.

2. Method according to Claim 1, in which the temperature representative of the operation of the engine (Tₑₐᵤ) is a temperature of the cooling liquid of the engine.

3. Method according to either one of the preceding claims, in which the first temperature threshold (Tᵥ₁) is essentially between 0°C and 5°C, and in which the second threshold (Tᵥ₂) is essentially equal to 20°C.
